# EUROPEAN PATENT SPECIFICATION

(11) **EP 3 930 465 B1**
(45) Date of publication and mention of the grant of the patent: **27.05.2026**
(21) Application number: 20705337.2
(22) Date of filing: 12.02.2020
(51) Int. Cl.: A01N 43/713, A01N 43/56, A01P 3/00

(54) **PESTICIDAL MIXTURES**
PESTIZIDGEMISCHE
MÉLANGES DE PESTICIDES

(30) Priority: 25.02.2019 EP 19159038
(43) Date of publication of application: 05.01.2022
(73) Proprietor: BASF SE, 67056 Ludwigshafen am Rhein (DE)
(72) Inventor: MONTAG, Jurith, 67117 Limburgerhof (DE); GEWEHR, Markus, 67117 Limburgerhof (DE)
(74) Representative: BASF IP Association
(86) International application number: PCT/EP2020/053586
(87) International publication number: WO 2020/173706

(56) References cited:
- EP-A1- 3 025 585
- EP-A1- 3 025 586
- EP-A1- 3 269 246
- EP-A1- 3 329 777
- EP-A1- 3 643 175
- WO-A1-2012/143127
- WO-A1-2013/162072
- WO-A1-2014/060502
- WO-A1-2018/050508
- WO-A1-2019/007717
- WO-A2-2010/130767
- AU-A1- 2017 257 833

## Description

The present invention relates to fungicidal mixtures comprising
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II,
where said fungicidal mixture does not comprise fenpropimorph.

Moreover, the invention relates to a method for controlling pests, this includes animal pests and harmful fungi, using the mixtures comprising compound I and compound II and the use of compound I and compound II for preparing such mixtures, and also compositions comprising such mixtures.

Additionally, the present invention also comprises a method for protection of plant propagation material (preferably seed) from harmful fungi or comprising contacting the plant propagation materials (preferably seeds) with an inventive mixture in pesticidally effective amounts

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil.

These young plants may also be protected before transplantation by a total or partial treatment by immersion or pouring. In a particular preferred embodiment, the term propagation material denotes seeds.

Additionally, the present invention also comprises a method for protection of plant propagation material (preferably seed) from harmful fungi comprising contacting the plant propagation materials (preferably seeds) with the inventive mixture in pesticidally effective amounts.

Moreover, the invention relates to a method for controlling harmful fungi using the inventive mixtures and to the use of the compounds present in the inventive mixtures for preparing such mixtures, and also to compositions comprising such mixtures.

Compound I and analogues as well as its pesticidal activity and methods for producing it are known e.g. from WO 2013/162072, EP 3329777, AU 2017257833, WO2019/007717, WO 2018/050508, EP 3025585, EP 3269246, EP 3025586, EP 3643175 and WO 2010/130767.

EP 3643175 belongs to the prior art according to article 54(3) EPC.

Compounds II as well as their pesticidal activity and methods for producing them are known from known from WO 2012/143127 and WO 2014/60502 and WO2014/60521.

One typical problem arising in the field of pest control lies in the need to reduce the dosage rates of the active ingredient in order to reduce or avoid unfavorable environmental or toxicological effects whilst still allowing effective pest control.

In regard to the instant invention the term pests embrace harmful fungi and animal pests.

Another problem encountered concerns the need to have available pest control agents which are effective against a broad spectrum of harmful fungi and harmful animal pests.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compound in question. Therefore, there is a need for pest control agents that help prevent or overcome resistance.

It was therefore an object of the present invention to provide pesticidal mixtures which solve the problems of reducing the dosage rate and / or enhancing the spectrum of activity and / or combining knock-down activity with prolonged control and / or to resistance management.

We have found that this object is in part or in whole achieved by the fungicidal mixtures comprising
1) metyltetraprol and
2) N-(5-chloro-2-isopropylbenzyl)-N-cyclopropyl-3-(difluoromethyl)-5-fluoro-1-methyl-1H-pyrazole-4-carboxamide as compound II,
where said fungicidal mixture does not comprise fenpropimorph.

Especially, it has been found that the mixtures as defined in the outset show markedly enhanced activity against pests compared to the control rates that are possible with the individual compounds when applied to plants, parts of plants, seeds, or at their locus of growth.

It has been found that the activity of the mixtures comprising compound I and compound II goes far beyond the fungicidal of the active compounds present in the mixture alone (synergistic activity).

Moreover, we have found that simultaneous, that is joint or separate, application of the compound I and the compound II or successive application of the compound I and the compound II allows enhanced control of harmful fungi, compared to the control rates that are possible with the individual compounds (synergistic mixtures).

The ratio by weight of compound I and compound II in binary mixtures is from 10000:1 to 1:10000, from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1.

All above-referred mixtures are herein below referred to as "inventive mixtures" or "mixtures according to the invention".

The mixtures comprising compound I and compound II can further contain one or more insecticides, fungicides, herbicides.

The mixtures comprising compound I and compound II can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

The resulting agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and compositions thereof, respectively, on to plant propagation material, especially seeds include dressing, coating, pelleting, dusting, soaking and in-furrow application methods of the propagation material. Preferably, the inventive mixtures or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.01 to 1.0 kg per ha, and in particular from 0.05 to 0.75 kg per ha.

In treatment of plant propagation materials such as seeds, e. g. by dusting, coating or drenching seed, amounts of active substance of from 0.01-10 kg, preferably from 0.1-1000 g, more preferably from 1-100 g per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition comprising compound I and compound II usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition comprising compound I and compound II is thus obtained. Usually, 20 to 2000 liters, preferably 50 to 400 liters, of the ready-to-use spray liquor are applied per hectare of agricultural useful area.

According to one embodiment, individual components of the composition comprising compound I and compound II such as parts of a kit or parts of a binary mixture may be mixed by the user himself in a spray tank or any other kind of vessel used for applications (e. g. seed treater drums, seed pelleting machinery, knapsack sprayer) and further auxiliaries may be added, if appropriate.

Consequently, one embodiment of the invention is a kit for preparing a usable pesticidal composition, the kit comprising a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.

As said above, the present invention comprises a method for controlling harmful fungi, wherein the pest, their habitat, breeding grounds, their locus or the plants to be protected against pest attack, the soil or plant propagation material (preferably seed) are treated with a pesticidally effective amount of an inventive mixture.

The mixtures comprising compound I and compound II are especially suitable for ontrolling phytopathogenic pests on cereals.

In one embodiment, the invention is directed to a method for controlling phytopathogenic fungi on cereals, wherein the pest, their habitat, breeding grounds, their locus or the plants to be protected against pest attack, the soil or plant propagation material are treated with an effective amount of a fungicidal mixture comprising, as active components,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II.

According to the invention the pest, their habitat, breeding grounds, their locus or the plants to be protected against pest attack, the soil or plant propagation material are treated with an effective amount of a fungicidal mixture comprising, as active components compound I and compound II.

The mixtures comprising compound I and compound II, respectively, are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: *Ascomycetes such* as *Ophiostoma spp., Ceratocystis spp., Aureobasidium pullulans, Sclerophoma spp., Chaetomium spp., Humicola spp., Petriella spp., Trichurus spp.; Basidiomycetes such* as *Coni-ophora spp., Coriolus spp., Gloeophyllum spp., Lentinus spp., Pleurotus spp., Poria spp., Ser-pula spp. and Tyromyces spp., Deuteromycetes such* as *Aspergillus spp., Cladosporium spp., Penicillium spp., Trichoderma spp., Alternaria spp., Paecilomyces spp. and Zygomycetes such* as *Mucor spp., and in addition in the protection of stored products and harvest the following yeast fungi are worthy of note: Candida spp.* and *Saccharomyces cervisiae.*

They are also important for controlling a multitude of fungi on various cultivated plants, such as bananas, cotton, vegetable species (for example cucumbers, beans and cucurbits), cereals such as wheat, rye, barley, rice, oats; grass coffee, potatoes, corn, fruit species, soya, tomatoes, grapevines, ornamental plants, sugar cane and also on a large number of seeds. In a preferred embodiment, the mixtures comprising compound I and compound II are used in soya (soybean), cereals and corn.

The mixtures comprising compound I and compound II are particularly suitable for controlling wheat diseases caused by *Alternaria spp. (Alternaria leaf spot), Ascochyta tritici (anthracnose), Blumeria (formerly Erysiphe) graminis (powdery mildew), Botrytis cinerea (teleomorph: Botryotinia fuckeliana: grey mold), Cladosporium herbarum (black ear), Drechslera (syn. Helminthosporium, teleomorph: Pyrenophora) tritici-repentis (tan spot), Epicoccum spp. (black mold), Fusarium (teleomorph: Gibberella) graminearum or Fusarium culmorum (root rot, scab or head blight), Gaeumannomyces graminis (take-all), Microdochium (syn. Fusarium) nivale (pink snow mold), Mycosphaerella 15 graminicola (anamorph: Septoria tritici, Septoria blotch), Polymyxa graminis, Pseudocercosporella herpotrichoides (eyespot, teleomorph: Tapesia yallundae), Puc-cinia graminis (stem or black rust), Puccinia recondita (brown or leaf rust), Pyrenophora (anamorph: Drechslera) triticirepentis (tan spot), Pythium spp. (damping-off), Rhizoctonia cerealis (Rhizoctonia spring blight), Septoria tritici (Septoria blotch), Stagonospora nodorum (Stagonospora blotch, teleomorph: Leptosphaeria [syn. Phaeosphaeria] nodorum), Tilletia. tritici (syn. Tilletia caries, wheat bunt), T. controversa (dwarf bunt) or Typhula incarnata (grey snow mold).*

The mixtures comprising compound I and compound II are also particularly suitable for controlling barley diseases caused by *Ascochyta hordei, Bipolaris (teleomorph: Cochliobolus, spot blotch) sorokiniana, Blumeria (formerly Erysiphe) graminis (powdery mildew), Botrytis cinerea (teleomorph: Botryotinia fuckeliana : grey mold), Cladosporium herbarum (black ear), Claviceps purpurea (ergot), Cochliobolus (anamorph: Helminthosporium of Bipolaris) sativus, Drechslera (syn. Helminthosporium, teleomorph: Pyrenophora ) teres, Epicoccum spp. (black mold), Fusarium (teleomorph: Gibberella ) culmorum (root rot, scab or head blight) on cereals (e.g. wheat or barley), Gaeumannomyces graminis (take-all), Gibberella spp. (e. g. G. zeae), Helmintho-sporium spp. (syn. Drechslera , teleomorph: Cochliobolus), Microdochium (syn. Fusarium) nivale (pink snow mold), Mycosphaerella spp. , Polymyxa spp., Pseudocercosporella herpotrichoides (eyespot, teleomorph: Tapesia yallundae ), Puccinia recondita (brown or leaf rust), Pyrenophora (anamorph: Drechslera ) teres (net blotch), Pyricularia grisea, Ramularia collo-cygni (Ramularia leaf spots, Physiological leaf spots), Rhizoctonia cerealis (Rhizoctonia spring blight), Rhynchosporium secalis (scald), Septoria (syn.* Stagonospora ) *nodorum (Stagonospora blotch), Stagonospora spp. , Tilletia spp. (common bunt or stinking smut), Typhula incarnata (grey snow mold), or Ustilago spp. (loose smut), e. g. U. nuda and U. avaenae.*

The mixtures comprising compound I and compound II are particularly suitable for controlling wheat diseases caused by *Septoria tritici, Microduchium nivale, Erysiphe graminis tritici, Phaeospheria nodorum or Pyrenophera tritici-repentis.*

The mixtures comprising compound I and compound II are also particularly suitable for controlling barley diseases caused by *Erysiphe graminis hordei, Pyrenophera teres, Ramularia collicygni or Rynchosporium secalis.*

The mixtures comprising compound I and compound II are also particularly suitable for controlling wheat diseases caused by *Puccinia recondita (brown or leaf rust), Puccinia striiformis (stripe or yellow rust), or Puccinia graminis (stem or black rust).*

The mixtures comprising compound I and compound II are also particularly suitable for controlling barley diseases caused by *Puccinia recondita (brown or leaf rust), Puccinia striiformis (stripe or yellow rust), or Puccinia graminis (stem or black rust).*

The mixtures comprising compound I and compound II are especially useful for controlling phytopathogenic fungi in cereals such as wheat, barley or rye, especially on wheat and barley.

In one especially preferred embodiment, the mixtures comprising compound I and compound II are used for controlling the following phytopathogenic fungi on wheat: *Septoria tritici, Pyrenophera tritici-repentis, Microduchium nivale, Erysiphe graminis tritici or Phaeospheria nodorum.*

In one especially preferred embodiment, the mixtures comprising compound I and compound II are used for controlling the following phytopathogenic fungi on barley: *Erysiphe graminis hordei, Pyrenophera teres, Ramularia collicygni or Rynchosporium secalis.*

In one especially preferred embodiment, the mixtures comprising compound I and compound II are used for controlling the following phytopathogenic fungi on wheat, barley or rye: *Puccinia recondita (brown or leaf rust), Puccinia striiformis (stripe or yellow rust), or Puccinia graminis (stem or black rust*)*.*

In preferred embodiments, the following mixtures comprising compound I and compound II can be used on the following crops and pests:

| # | Compound I | Compound II | Crop | Disease |
|---|---|---|---|---|
| 1 | Metyltetraprol | Isoflucypram | wheat | *Microduchium nivale* |
| 2 | Metyltetraprol | Isoflucypram | wheat | *Erysiphe graminis tritici* |
| 3 | Metyltetraprol | Isoflucypram | wheat | *Septoria tritici* |
| 4 | Metyltetraprol | Isoflucypram | wheat | *Phaeospheria nodorum* |
| 5 | Metyltetraprol | Isoflucypram | wheat | *Pyrenophera tritici-repentis* |
| 6 | Metyltetraprol | Isoflucypram | wheat | *Puccinia recondita* |
| 7 | Metyltetraprol | Isoflucypram | wheat | *Puccinia striiformis* |
| 8 | Metyltetraprol | Isoflucypram | wheat | *Puccinia graminis* |
| 9 | Metyltetraprol | Isoflucypram | barley | *Erysiphe graminis hordei* |
| 10 | Metyltetraprol | Isoflucypram | barley | *Pyrenophera teres* |
| 11 | Metyltetraprol | Isoflucypram | barley | *Ramularia collicygni* |
| 12 | Metyltetraprol | Isoflucypram | barley | *Rynchosporium secalis* |
| 13 | Metyltetraprol | Isoflucypram | barley | *Puccinia recondita* |
| 14 | Metyltetraprol | Isoflucypram | barley | *Puccinia striiformis* |
| 15 | Metyltetraprol | Isoflucypram | barley | *Puccinia graminis* |
| 16 | Metyltetraprol | Isoflucypram | rye | *Puccinia recondita* |
| 17 | Metyltetraprol | Isoflucypram | rye | *Puccinia striiformis* |
| 18 | Metyltetraprol | Isoflucypram | rye | *Puccinia graminis* |

In general, "pesticidally effective amount" means the amount of the mixtures comprising compound I and compound II or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The mixtures comprising compound I and compound II are employed by treating the fungi or the plants, plant propagation materials (preferably seeds), materials or soil to be protected from fungal attack with a pesticidally effective amount of the active compounds. The application can be carried out both before and after the infection of the materials, plants or plant propagation materials (preferably seeds) by the pests.

In the context of the present invention, the term plant refers to an entire plant, a part of the plant or the propagation material of the plant.

The mixtures comprising compound I and compound II and compositions thereof also important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (Table Grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering.

Furthermore, plants are also covered that are by the use of recombinant DNA techniques capable to synthesize one or more insecticidal proteins.

Furthermore, plants are also covered that are by the use of recombinant DNA techniques capable to synthesize one or more proteins to increase the resistance or tolerance of those plants to bacterial, viral or fungal pathogens. The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition.

Furthermore, plants are also covered that contain by the use of recombinant DNA techniques a modified amount of substances of content or new substances of content, specifically to improve raw material production.

The separate or joint application of the compounds of the mixtures comprising compound I and compound II is carried out by spraying or dusting the seeds, the seedlings, the plants or the soils before or after sowing of the plants or before or after emergence of the plants.

The mixtures comprising compound I and compound II and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

Customary application rates in the protection of materials are, for example, from 0.01 g to 1000 g of active compound per m² treated material, desirably from 0.1 g to 50 g per m².

For use in spray compositions, the content of the mixture of the active ingredients is from 0.001 to 80 weight %, preferably from 0.01 to 50 weight % and most preferably from 0.01 to 15 weight %.

The present invention offers the following advantages:
It provides pesticidal mixtures which solve the problems of reducing the dosage rate and / or
excellent spectrum of activity and / or combining knock-down activity with prolonged control and / or to resistance management.

### Experiments

### Microtest

The active compounds were formulated separately as a stock solution having a concentration of 10000 ppm in dimethyl sulfoxide.

### 1. Activity against Microdochium nivale (MONGNI)

The stock solutions were mixed according to the ratio, pipetted onto a micro titer plate (MTP) and diluted with water to the stated concentrations. A spore suspension of Microdochium nivale in an aqueous biomalt or yeast-bactopeptone-glycerine or DOB solution was then added. The plates were placed in a water vapor-saturated chamber at a temperature of 18°C. Using an absorption photometer, the MTPs were measured at 405 nm 7 days after the inoculation.

### 2. Activity against leaf blotch on wheat caused by Septoria tritici (SEPTTR)

The stock solutions were mixed according to the ratio, pipetted onto a micro titer plate (MTP) and diluted with water to the stated concentrations. A spore suspension of a Qoi resistant isolate of Septoria tritici in an aqueous biomalt or yeast-bactopeptone-glycerine or DOB solution was then added. The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds.

These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

### MONGNI

| Active compound / active mixture | Concentration (ppm) | Mixture | Observed efficacy | Calculated efficacy according to Colby (%) | Synergism (%) |
|---|---|---|---|---|---|
| Metyltetraprol | 0.016 | - | 32 | | |
| Isoflucypram | 0.063 | - | 40 | | |
| Metyltetraprol | 0.016 | 1 : 4 | 97 | 59 | 38 |
| Isoflucypram | 0.063 | | | | |

### SEPTTR Qoi resistant

| Active compound / active mixture | Concentration (ppm) | Mixture | Observed efficacy | Calculated efficacy according to Colby (%) | Synergism (%) |
|---|---|---|---|---|---|
| Metyltetraprol | 0.063 | - | 1 | | |
| | 0.016 | - | 0 | | |
| Isoflucypram | 0.063 | | 34 | | |
| | 0.016 | - | 5 | | |
| | 0.004 | - | 0 | | |
| Metyltetraprol | 0.063 | | 100 | 34 | 66 |
| Isoflucypram | 0.063 | 1 : 1 | | | |
| Metyltetraprol | 0.063 | 4 : 1 | 98 | 6 | 92 |
| Isoflucypram | 0.016 | | | | |
| Metyltetraprol | 0.063 | 16 : 1 | 44 | 1 | 43 |
| Isoflucypram | 0.004 | | | | |
| Metyltetraprol | 0.016 | 1 : 4 | 79 | 34 | 45 |
| Isoflucypram | 0.063 | | | | |

## Claims

1. A non-therapeutic method for controlling phytopathogenic pests, wherein the pest, their habitat, breeding grounds, their locus or the plants to be protected against pest attack, the soil or plant propagation material are treated with an effective amount of a fungicidal mixture comprising, as active components,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II;
where said fungicidal mixture does not comprise fenpropimorph.

2. A method for controlling phytopathogenic fungi on cereals, wherein the pest, their habitat, breeding grounds, their locus or the plants to be protected against pest attack, the soil or plant propagation material are treated with an effective amount of a fungicidal mixture comprising, as active components,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound.

3. The method according to any of claims 1 to 2 wherein the phytopathogenic fungus is *Mi-croduchium nivale, Erysiphe graminis tritici, Septoria tritici, Phaeospheria nodorum or Pyrenophera tritici* on wheat.

4. The method according to any of claims 1 to 3 wherein the phytopathogenic fungus is *Erysiphe graminis hordei, Pyrenophera teres, Ramularia collicygni or Rynchosporium secalis* on barley.

5. The method according to any of claims 1 to 4 wherein the phytopathogenic fungus is *Puc-cinia recondita* (brown or leaf rust), *Puccinia striiformis* (stripe or yellow rust), or *Puccinia graminis* (stem or black rust) on wheat, barley or rye.

6. A method for protection of plant propagation material from pests comprising contacting the plant propagation materials with a fungicidal mixture comprising, as active components,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II;
where said fungicidal mixture does not comprise fenpropimorph.

7. A method as claimed in any of claims 1 to 6, wherein said fungicidal is applied in an amount of from 0.01 g to 10 kg per 100 kg of plant propagation materials.

8. A method as claimed in any of claims 1 to 7, wherein said fungicidal mixture is applied simultaneously, that is jointly or separately, or in succession.

9. Plant propagation material, comprising a fungicidal mixture comprising, as active compo-nents,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II,
in an amount of from 0.01 g to 10 kg per 100 kg of plant propagation materials,
where said fungicidal mixture does not comprise fenpropimorph.

10. Fungicidal mixture comprising, as active components,
1) 1-[2-[[1-(4-chlorophenyl)pyrazol-3-yl]oxymethyl]-3-methyl-phenyl]-4-methyl-tetrazol-5-one as compound I and
2) N-(5-chloro-2-isopropylbenzyl)-N-cyclopropyl-3-(difluoromethyl)-5-fluoro-1-methyl-1H-pyrazole-4-carboxamide as compound II,
where said fungicidal mixture does not comprise fenpropimorph.

11. A mixture as claimed in claim 10, wherein the ratio by weight of compound I and compound II is from 500:1 to 1:500.

12. A pesticidal composition, comprising a liquid or solid carrier and a mixture as defined in any of claims 10 to 11.

## Patentansprüche

1. Ein nicht-therapeutisches
Methode zur Bekämpfung phytopathogener Schädlinge, wobei der Schädling, sein Lebensraum und die Fortpflanzung des Schädlings
Boden, deren Standort oder die Pflanzen, die vor Schädlingsangriffen geschützt werden sollen, wird der Boden oder das Pflanzenvermehrungsmaterial mit einer wirksamen Menge einer fungiziden Mischung behandelt, die als aktive Bestandteile besteht,
1) 1-[2-[[1-(4-Chlorophenyl)Pyrazol-3-yl]Oxymethyl]-3-Methyl-Phenyl]-4-Methyl-Tetrazol-5-eins als Compound I und
2) N-(5-Chlor-2-Isopropylbenzyl)-N-Cyclopropyl-3-(Difluormethyl)-5-Fluor-1-Methyl-1H-Pyrazol-4-Carboxamid als Verbindung II;
wobei das fungizide Gemisch kein Fenpropimorph enthält.

2. Eine Methode zur Bekämpfung phytopathogener Pilze auf Getreide, bei der der Schädling, sein Lebensraum,
Brutplätze, deren Standort oder die Pflanzen, die vor Schädlingsangriffen geschützt werden sollen, werden der Boden oder Pflanzenmaterial mit einer wirksamen Menge fungizider Mischung behandelt, die als aktive Bestandteile besteht,
1) 1-[2-[[1-(4-ch-lorophenyl)pyrazol-3-yl]oxymethyl]-3-methyl-phenyl]-4-methyl-tetrazol-5-one als Verbindung I und
2) N-(5-Chlor-2-Isopropylbenzyl)-N-Cyclopropyl-3-(Difluormethyl)-5-Fluor-1-Methyl-1H-Pyrazol-4-Carboxamid als Verbindung.

3. Die Methode gemäß jeder der Ansprüche 1 bis 2, bei denen der phytopathogene Pilz *Mi-croduchium nivale, Erysiphe graminis tritici, Septoria tritici, Phaeospheria nodorum oder Pyrenophera tritici* auf Weizen ist.

4. Die Methode gemäß einer der Behauptungen 1 bis 3, bei der der phytopathogene Pilz Ery - *siphe graminis hordei, Pyrenophera teres, Ramularia collicygni oder Rynchosporium seca*/*is* Auf Gerste.

5. Die Methode gemäß einer der Behauptungen 1 bis 4, bei der der phytopathogene Pilz enthalten ist *Puc-cinia recondita* (brauner oder Blattrost), *Puccinia striiformis* (gestreifter oder gelber Rost) oder *Puccinia graminis* (Stängel- oder schwarzer Rost) auf Weizen, Gerste oder Roggen.

6. Eine Methode zum Schutz von Pflanzenvermehrungsmaterial vor Schädlingen, die Kontakt mit dem Pflanzenvermehrungsmaterialien mit einer fungiziden Mischung, die als aktive Bestandteile besteht,
1) 1-[2-[[1-(4-Chlorophenyl)Pyrazol-3-yl]Oxymethyl]-3-Methyl-Phenyl]-4-Methyl-Tetrazol-5-eins als Komplex I und
2) N-(5-Chlor-2-Isopropylbenzyl)-N-Cyclopropyl-3-(Difluormethyl)-5-Fluor-1-Methyl-1H-Pyrazol-4-Carboxamid als Verbindung 11;
wobei das fungizide Gemisch kein Fenpropimorph enthält.

7. Eine Methode, wie sie in jedem der Ansprüche 1 bis 6 beansprucht wird, bei der das fungizide Mittel in einer Menge von 0,01 g bis 10 kg pro 100 kg pflanzlicher Vermehrungsmaterialien angewendet wird.

8. Eine Methode, wie sie in einem der Ansprüche 1 bis 7 beansprucht wird, bei der die betreffende fungizide Mischung gleichzeitig angewendet wird, also gemeinsam, getrennt oder nacheinander.

9. Pflanzenvermehrungsmaterial, bestehend aus einer fungiziden Mischung, die als aktive Bestandteile besteht,
1) 1-[2-[[1-(4-ch-lorophenyl)pyrazol-3-yl]oxymethyl]-3-methyl-phenyl]-4-methyl-tetrazol-5-one als Verbindung I und
2) N-(5-Chlor-2-Isopropylbenzyl)-N-Cyclopropyl-3-(Difluormethyl)-5-Fluor-1-Methyl-1H-Pyrazol-4-Carboxamid als Verbindung II,
in einer Menge von 0,01 g bis 10 kg pro 100 kg pflanzlicher
Vermehrungsmaterialien, wobei das fungizidale Gemisch kein Fenpropimorph enthält.

10. Fungizide Mischung, bestehend aus als aktiven Bestandteilen,
1) 1-[2-[[1-(4-ch-lorophenyl)pyrazol-3-yl]oxymethyl]-3-methyl-phenyl]-4-methyl-tetrazol-5-one als Verbindung I und
2) N-(5-Chlor-2-Isopropylbenzyl)-N-Cyclopropyl-3-(Difluoromethyl)-5-Fluor-1-Methyl-1H-Pyrazol-4-Carboxamid als Verbindung II,
wobei das fungizide Gemisch kein Fenpropimorph enthält.

11. Eine Mischung, wie in Anspruch 10 behauptet, bei der das Verhältnis nach Gewicht von Verbindung I und com-Pfund 11 ist von 500:1 bis 1:500.

12. Eine pestiziale Zusammensetzung, bestehend aus einem flüssigen oder festen Träger und einer Mischung, wie sie in einer der Ansprüche 10 bis 11 definiert ist.

## Revendications

1. Un traitement non thérapeutique
méthode de contrôle des parasites phytopathogènes, où le nuisible, son habitat, se reproduisent
les sols, leur lieu ou les plantes à protéger contre les attaques de nuisibles, le sol ou le matériau d'agation végétale sont traités avec une quantité efficace d'un mélange fongicide composé, en tant que composants actifs,
1) 1-[2-[[1-(4-chlorophényl)pyrazol-3-yl]oxyméthyl]-3-méthyl-phényl]-4-méthyl-tétrazol-5-un comme composé I et
2) N-(5-chloro-2-isopropylbenzyl)-N-cyclopropyl-3-(difluorométhyl)-5-fluoro-1-méthyl-1H-pyrazole-4-carboxamide comme composé II ;
où ce mélange fongicide ne comprend pas le fenpropimorphe.

2. Une méthode de contrôle des champignons phytopathogènes sur les céréales, où le ravageur, son habitat,
les lieux de reproduction, leur lieu ou les plantes à protéger contre les attaques de nuisibles, le sol ou le matériau de propagation des plantes sont traités avec une quantité efficace d'un mélange fongicide comprenant, en tant que composants actifs,
1) 1-[2-[[1-(4-ch) loropényl)pyrazol-3-yl]oxyméthyl]-3-méthyl-phényl]-4-méthyl-tétrazol-5-une comme composé I et
2) N-(5-chloro-2-isopropylbenzyl)-N-cyclopropyl-3-(difluorométhyl)-5-fluoro-1-méthyl-1H-pyrazole-4-carboxamide comme composé.

3. La méthode selon l'une des revendications 1 à 2 où le champignon phytopathogène est *Mi-croduchium nivale, Erysiphe graminis tritici, Septoria tritici, Phaeospheria nodorum ou Pyrenophera tritici* sur le blé.

4. La méthode selon l'une des revendications 1 à 3 dans laquelle le champignon phytopathogène est *Ér-siphe graminis hordei, Pyrenophera teres, Ramu*/*aria collicygni ou Rynchosporium seca*/*is* Sur de l'orge.

5. La méthode selon l'une des affirmations 1 à 4 dans laquelle le champignon phytopathogène est *Puc-cinia recondita* (rouille brune ou rouille feuillaire), *Puccinia striiformis* (rouille rayée ou jaune) ou *Puccinia graminis* (rouille de tige ou rouille noire) sur blé, orge ou seigle.

6. Une méthode de protection du matériau de propagation végétale contre les nuisibles comprenant le contact avec
Matériaux de propagation végétale avec un mélange fongicide comprenant, en tant que composants actifs,
1) 1-[2-[[1-(4-chlorophényl)pyrazol-3-yl]oxyméthyl]-3-méthyl-phényl]-4-méthyl-tétrazol-5-un comme composé I et
2) N-(5-chloro-2-isopropylbenzyl)-N-cyclopropyl-3-(difluorométhyl)-5-fluoro-1-méthyl-1H-pyrazole-4-carboxamide en composé 11 ;
où ce mélange fongicide ne comprend pas le fenpropimorphe.

7. Une méthode telle que revendiquée dans l'une des revendications 1 à 6, dans laquelle ledit fongicide est appliqué en quantité allant de 0,01 g à 10 kg pour 100 kg de matériaux de propagation végétale.

8. Une méthode telle que revendiquée dans l'une des revendications 1 à 7, dans laquelle ce mélange fongicide est appliqué simultanément, conjointement,
séparément ou successivement.

9. Matériau de propagation végétale, composé d'un mélange fongicide composant, sous forme de compo-nents actifs,
1) 1-[2-[[1-(4-ch) loropényl)pyrazol-3-yl]oxyméthyl]-3-méthyl-phényl]-4-méthyl-tétrazol-5-une comme composé I et
2) N-(5-chloro-2-isopropylbenzyl)-N-cyclopropyl-3-(difluorométhyl)-5-fluoro-1-méthyl-1H-pyrazole-4-carboxamide comme composé II,
dans une quantité allant de 0,01 g à 10 kg pour 100 kg de matériaux de propagation végétale, lorsque ce mélange fongicide ne comprend pas de fenpropimorphe.

10. Mélange fongicide comprenant, en tant que composants actifs,
1) 1-[2-[[1-(4-ch) loropényl)pyrazol-3-yl]oxyméthyl]-3-méthyl-phényl]-4-méthyl-tétrazol-5-une comme composé I et
2) N-(5-chloro-2-isopropylbenzyl)-N-cyclopropyl-3-(difluorométhyl)-5-fluoro-1-méthyl-1H-pyrazole-4-carboxamide comme composé II,
où ce mélange fongicide ne comprend pas le fenpropimorphe.

11. Un mélange tel que revendiqué dans la revendication 10, dans lequel le rapport en poids du composé I et com-livre 11 est de 500:1 à 1:500.

12. Une composition pesticide, comprenant un vecteur liquide ou solide et un mélange tel que défini dans l'une des revendications 10 à 11.
